Europäisches Patentamt

European Patent Office

Office européen des brevets

(11) Veröffentlichungsnummer: **0 554 750 A2**

# (12) EUROPÄISCHE PATENTANMELDUNG

(21) Anmeldenummer: **93101075.5**

(22) Anmeldetag: **25.01.93**

(51) Int. Cl.5: **C08G 18/76**, C08G 18/48,
C08G 18/66, C08G 18/50,
C08G 18/36, C08K 7/14,
B29C 45/00

(30) Priorität: **05.02.92 DE 4203215**

(43) Veröffentlichungstag der Anmeldung:
**11.08.93 Patentblatt 93/32**

(84) Benannte Vertragsstaaten:
**BE DE ES FR GB IT NL SE**

(71) Anmelder: **BAYER AG**

**W-5090 Leverkusen 1 Bayerwerk(DE)**

(72) Erfinder: **Rasshofer, Werner, Dr.**
**Leopold-Gmelin-Strasse 31**
**W-5000 Köln 80(DE)**
Erfinder: **Weber, Christian, Dr.**
**Paul-Klee-Strasse 68a**
**W-5090 Leverkusen 1(DE)**
Erfinder: **Wagner, Joachim, Dr.**
**Semmelweisstrasse 135**
**W-5000 Köln 80(DE)**
Erfinder: **Liman, Ulrich, Dr.**
**Wiener-Neustädter-Strasse 105**
**W-4019 Monheim 2(DE)**

(54) **Verfahren zur Herstellung von Formkörpern.**

(57) Ein Verfahren zur Herstellung von besonders leicht recyclisierbaren Formkörpern der Dichte 0,8 bis 1,4 g/cm$^3$ aus Harnstoffgruppen aufweisenden Polyurethanen durch ein- oder zweistufige Umsetzung einer Polyisocyanatkomponente der NCO-Funktionalität 2,0 bis 2,2 mit einem NCO-Gehalt von 8 bis 32 Gew.-% mit einer Polyetherpolyolkomponente einer Hydroxylfunktionalität von 2,5 bis 3,5 und einer Hydroxylzahl von 35 bis 50 mg KOH/g und sterisch gehinderten aromatischen Diaminen als Kettenverlängerungsmittel in Gegenwart von Katalysatoren und unter Mitverwendung von Hilfs- und Zusatzmitteln, wobei als Hilfs- und Zusatzmittel aliphatische Polyetheramine des Molekulargewichtsbereichs 200 bis 800 und/oder Ethylendiamin-Propoxylierungsprodukte des Hydroxylzahlbereichs 200 bis 1200 mg KOH/g und/oder Veresterungsprodukte von 1,6-Hexandiol mit Rizinolsäure, gegebenenfalls neben weiteren Hilfs- und Zusatzmitteln verwendet werden.

Die Erfindung betrifft ein neues Verfahren zur Herstellung von Formkörpern auf Basis von Harnstoffgruppen aufweisenden Polyurethanen nach der Reaktionsspritzgußtechnik unter Verwendung von ausgewählten Ausgangsmaterialien, die sich durch eine hervorragende Wiederverwendbarkeit durch Fließpressen unter weitgehender Beibehaltung ihrer mechanischen Eigenschaften auszeichnen.

Die Wiederverwendbarkeit gebrauchter Kunststoffe wird immer mehr zu einer Vorbedingung für den Einsatz der Kunststoffe schlechthin. Es ist bereits bekannt, daß nach der Reaktionsspritzgußtechnik hergestellte Formkörper aus Harnstoffgruppen aufweisenden Polyurethanen, gegebenenfalls nach erfolgter Granulierung durch Fließpressen verformt und so einem neuen Einsatzgebiet zugeführt und angepaßt werden können. Die bislang bekanntgewordenen Verfahren (z.B. DE-OS 27 33 756 oder DE-OS 38 02 427) sind jedoch mit dem Nachteil behaftet, daß die durch Fießpressen verformten Formkörper mechanische Werte aufweisen, die deutlich unter den entsprechenden Werten der "Primärkunststoffe" liegen.

Es war daher die der Erfindung zugrundeliegende Aufgabe, ein neues Verfahren zur Herstellung von Formkörpern auf Basis von Harnstoffgruppen aufweisenden Polyurethanen nach der Reaktionsspritzgußtechnik aufzufinden, welches aufgrund der speziellen Auswahl der eingesetzten Ausgangsmaterialien zu Kunststoffen führt, die nach der Methode des Fließpressens ohne nennenswerten Abfall der mechanischen Eigenschaften verformt werden können, so daß aus den entsprechenden "Primärkunststoffen" oder aus Abfallprodukten bei der Herstellung der "Primärkunststoffe" durch Fließpressen "Sekundärkunststoffe" herstellbar sind, die bezüglich ihrer mechanischen Eigenschaften den "Primärkunststoffen" vergleichbar sind.

Unter "Primärkunststoffen" sind in diesem Zusammenhang die nach der Reaktionsspritzgußtechnik in geschlossenen Formen aus den monomeren Ausgangsmaterialien hergestellten Kunststoffe zu verstehen. "Sekundärkunststoffe" sind solche, die aus diesen Primärkunststoffen bzw. aus Abfallprodukten, die bei der Herstellung der Primärkunststoffe anfallen, durch Fließpressen, d.h. durch thermische Verformung erhalten werden.

Gegenstand der Erfindung ist ein Verfahren zur Herstellung von Formkörpern der Dichte 0,8 bis 1,4 $g/cm^3$ aus Harnstoffgruppen aufweisenden Polyurethanen durch ein- oder zweistufige Umsetzung

a) einer Polyisocyanatkomponente, bestehend aus einem Polyisocyanat oder Polyisocyanatgemisch der Diphenylmethanreihe, mit

b) einer Polyolkomponente, bestehend aus mindestens einem Polyetherpolyol,

c) einer Diaminkomponente, bestehend aus 1-Methyl-3,5-diethyl-2,4-diaminobenzol oder dessen technischen Gemischen mit 1-Methyl-3,5-diethyl-2,6-diamino-benzol in einer Menge von 5 bis 100 Gew.-%, bezogen auf das Gewicht der Komponente b),

d) Katalysatoren für die NCO/OH-Additionsreaktion,

e) weiteren Hilfs- und Zusatzmitteln

unter Einhaltung einer NCO-Kennzahl von 70 bis 140 nach dem Prinzip der Reaktionsspritzgußtechnik in geschlossenen Formen, dadurch gekennzeichnet, daß man

als Komponente a) eine solche einer (mittleren) NCO-Funktionalität von 2,0 bis 2,2 und einem NCO-Gehalt von 8 bis 32, bevorzugt 18 bis 26 Gew.-%,

als Komponente b) eine solche einer (mittleren) Hydroxylfunktionalität von 2,5 bis 3,5, einer (mittleren) Hydroxylzahl von 35 bis 50 mg KOH/g, bestehend aus solchen Polyetherpolyolen, die endständig 5 bis 19 Gew.-%, bezogen auf das Gewicht der Polyetherpolyole, an aufgepropften Ethylenoxid-Blöcken aufweisen, und

als Komponente e) aliphatische Polyetheramine des Molekulargewichtsbereichs 200 bis 800 und/oder Ethylendiamin-Propoxylierungsprodukte des Hydroxylzahlbereichs 200 bis 1200 mg KOH/g und/oder Veresterungsprodukte von 1,6-Hexandiol mit Rizinolsäure in einer Gesamtmenge dieser Zusatzmittel von 0,1 bis 10 Gew.-%, bezogen auf das Gewicht der Komponente b), gegebenenfalls zusammen mit weiteren Hilfs- und Zusatzmitteln verwendet.

Bei der beim erfindungsgemäßen Verfahren einzusetzenden Polyisocyanatkomponente a) handelt es sich um Polyisocyanate oder Polyisocyanatgemische der Diphenylmethanreihe mit einem NCO-Gehalt von 8 bis 32, bevorzugt 18 bis 26 Gew.-% und einer (mittleren) NCO-Funktionalität von 2,0 bis 2,2.

In Betracht kommen insbesondere 4,4'-Diisocyanatodiphenylmethan, dessen flüssigen Gemische mit 2,4'-Diisocyanatodiphenylmethan und gegebenenfalls 2,2'-Diisocyanatodiphenylmethan und/oder mit seinen höheren, mehr als eine Isocyanatgruppe aufweisenden Homologen, sowie durch chemische Modifizierung derartiger Polyisocyanate erhaltene, Isocyanatgruppen aufweisende Derivate. Als chemische Modifizierung kommen in diesem Zusammenhang insbesondere die teilweise Carbodiimidisierung der Isocyanatgruppen und die teilweise Urethanisierung der Isocyanatgruppen der genannten Polyisocyanate bzw. Polyisocyanatgemische in Betracht. Die teilweise Carbodiimidisierung ist beispielsweise in US-PS 31 52 162, die teilweise Urethanisierung beispielsweise in DE-OS 16 18 380 beschrieben. Besonders bevorzugt sind solche

2

Diisocyanate, die durch Umsetzung mit Polypropylenglykolen mit einem bis zu 700 liegenden Molekulargewicht unter Einhaltung eines NCO/OH-Äquivalentverhältnisses von 3:1 bis 10:1 hergestellt worden sind. Vorzugsweise werden beim erfindungsgemäßen Verfahren bei Raumtemperatur flüssige Polyisocyanate oder Polyisocyanatgemische der Diphenylmethanreihe eingesetzt. Lediglich bei der Durchführung des erfindungsgemäßen Verfahrens nach dem Präpolymerprinzip ist es auch möglich, bei Raumtemperatur feste Polyisocyanate der Diphenylmethanreihe, insbesondere festes 4,4'-Diisocyanatodiphenylmethan einzusetzen.

Die Polyetherkomponente b) weist eine (mittlere) Hydroxylfunktionalität von 2,5 bis 3,5 und eine (mittlere) Hydroxylzahl von 35 bis 50 mg KOH/g auf. Die Komponente b) besteht ausschließlich aus solchen Polyetherpolyolen, die endständig aufgepfropfte Ethylenoxid-Blöcke in einer Menge von 5 bis 19 Gew.-%, bezogen auf das Gesamtgewicht der jeweiligen Polyetherpoylole, aufweisen. Es ist auch möglich, solche Polyetherpolyole einzusetzen, die diesen Bedingungen entsprechen, und die Füllstoffe (Polymerisate oder Polyadditionsprodukte) in dispergierter Form enthalten. Geeignete Polyetherpoylole b) sind beispielsweise in US-PS 42 18 543, Kolonne 7, Zeile 29 bis Kolonne 8, Zeile 11 beschrieben.

Als Komponente c) kommen aromatische Diamine der bereits obengenannten Art in Betracht. Diese Diamine werden in einer Menge von 5 bis 100, vorzugsweise 10 bis 35, bezogen auf das Gewicht der Komponente b) mitverwendet.

Bei der Komponente d) handelt es sich um die aus der Polyurethanchemie an sich bekannten Katalysatoren. Geeignet sind insbesondere die bekannten Zinnkatalysatoren. Geeignete Katalysatoren sind beispielsweise in US-PS 42 18 543, Kolonne 10, Zeile 26 bis Kolonne 11, Zeile 18 beschrieben. Die Katalysatoren werden im allgemeinen in Mengen von 0,01 bis 10, vorzugsweise von 0,05 bis 1 Gew.-%, bezogen auf das Gewicht der Komponente b) verwendet.

Als Zusatzmittel e) kommen insbesondere solche der bereits obengenannten Art in Betracht.

Bei den aliphatischen Polyetheraminen handelt es sich insbesondere um e1) aminierte Polypropylenglykole des Molekulargewichtsbereichs 200 bis 800, wie sie beispielsweise von der Firma Texaco unter der Bezeichnung ®Jeffamin angeboten werden.

Bei den Propoxylierungsprodukten von Ethylendiamin handelt es sich insbesondere um e2) um Anlagerungsprodukte von 3 bis 6 Mol Propylenoxid an ein Mol Ethylendiamin.

Bei den Estergruppen aufweisenden Umsetzungsprodukten von 1,6-Hexandiol und Rizinolsäure handelt es sich insbesondere e3) um solche einer Säurezahl von unter 5 und einer Hydroxylzahl von 12,5 bis 125, wie sie gemäß DE-OS 3 436 163 hergestellt und als innere Formtrennmittel verwendet werden.

Es ist erfindungswesentlich, daß bei der Durchführung des erfindungsgemäßen Verfahrens zumindest eines der beispielhaft genannten Zusatzmittel e1) bis e3) zum Einsatz gelangt, wobei deren Gesamtmenge 0,1 bis 10 Gew.-%, bezogen auf das Gewicht der Komponente b) ausmacht.

Neben den zuletzt genannten Zusatzmitteln e) können beim erfindungsgemäßen Verfahren weitere Hilfs- und Zusatzmittel e) mitverwendet werden.

Hierzu gehören beispielsweise e4) gemahlene Kurzglasfasern oder Glasflakes, die als Füll- bzw. Verstärkungsstoffe in Mengen von bis zu 30, vorzugsweise von 10 bis 25 Gew.-%, bezogen auf das Gesamtgewicht aller Ausgangsmaterialien incl. der Hilfs- und Zusatzstoffe, mitverwendet werden können.

Weitere Hilfs- und Zusatzmittel sind beispielsweise innere Formtrennmittel wie z.B. Zinkstearat, welches in Mengen von bis zu 5 Gew.-%, bezogen auf das Gewicht der Komponente b) zum Einsatz gelangen kann.

Die Durchführung des erfindungsgemäßen Verfahrens erfolgt nach dem bekannten Prinzip der Reaktionsspritzgußtechnik, wobei entweder nach dem Einstufen-Verfahren oder nach dem Zweistufen-Verfahren (Semiprepolymerprinzip) verfahren werden kann, wobei jeweils eine NCO-Kennzahl (Anzahl der im Reaktionsgemisch vorliegenden NCO-Gruppen, dividiert durch die Anzahl der im Reaktionsgemisch vorliegenden, gegenüber NCO-Gruppen reaktionsfähigen Gruppen, multipliziert mit 100) von 70 bis 140, vorzugsweise 90 bis 125 eingehalten wird.

Bei der Durchführung des erfindungsgemäßen Verfahrens nach dem Einstufen-Prinzip werden die Komponenten b) bis e) zu einer "Polyolkomponente" vereinigt, die entsprechend der Lehre der US-PS 42 18 543 nach dem Reaktionsspritzgußverfahren mit der Polyisocyanatkomponente a) zur Reaktion gebracht wird.

Bei der Durchführung des erfindungsgemäßen Verfahrens nach dem Zweistufen-Prinzip wird zumindest ein Teil der Komponente b) (beispielsweise 50, 90 oder 100 Gew.-% der Komponente b)) mit der Gesamtmenge der Polyisocyanatkomponente a) zu einem "NCO-Semiprepolymer" umgesetzt, welches anschließend mit einem Gemisch der restlichen Ausgangsmaterialien und Zusatzmittel nach dem Prinzip der Reaktionsspritzgußtechnik verarbeitet wird.

Dieses Prinzip ist beispielsweise in der DE-PS 38 27 595 beschrieben.

Die nach dem erfindungsgemäßen Verfahren erhaltenen Formkörper zeichnen sich durch die bemerkenswerte Eigenschaft aus, daß sie ihre ausgezeichneten mechanischen Eigenschaften nach einer Weiterverarbeitung bzw. Weiterverformung nach der Methode des Fließpressens weitgehend beibehalten.

In den nachfolgenden Beispielen beziehen sich alle Mengenangaben in % und in Teilen auf das Gewicht.

Beispiel 1

Herstellung eines Polyurethanharnstoff-Teils des Standes der Technik (nicht erfindungsgemäßes Vergleichsbeispiel)

A: Polyolkomponente

70,12 Tle eines Polyetherpolyols der OH-Zahl 28, hergestellt durch Propoxylierung von Trimethylolpropan und anschließende Ethoxylierung des Propoxylierungsproduktes (PO:EO-Gewichtsverhältnis 86,5:13,5),
23,7 Tle eines Gemisches aus 65 % 2,4- und 35 Gew.-% 2,6-Diamino-3,5-diethylbenzol,
2 Tle eines Estergruppen aufweisenden Umsetzungsproduktes der OH-Zahl 35 aus Ricinolsäure und 1,6-Hexandiol,
1 Tl Triethylendiamin,
0,18 Tle Dimethylzinndilaurat
0,2 Tle Dibutylzinndilaurat
0,9 Tle N,N-(Bis-3-dimethylamino-propyl)-amin,
1,8 Tle Zinkstearat.

B: Isocyanat-Komponente (Kennzahl 110)

60 Tle eines Semiprepolymeren mit einem NCO-Gehalt von 24,5 % und einer Viskosität von 500±100 mPa.s (23°C), welches durch Umsetzung eines Gemischs aus 90 % 4,4'- und 10 % 2,4'-Diisocyanatodiphenylmethan mit Polypropylenglykol der OH-Zahl 515 erhalten wurde.

Herstellung der RIM-Teile (1-I)

Die oben aufgeführte Polyolkomponente wurde auf 45°C, die oben aufgeführte Isocyanatkomponente auf 40°C erwärmt und nach dem Reaktionsspritzgußprinzip (RIM-Verfahren) auf einem 12 l Rimdomat der Fa. Hennecke, Birlinghoven, in ein auf 65°C temperiertes Werkzeug (Plattenform der Abmessung 380 x 200 x 3 mm), dessen Innenwände mit einem äußeren Trennmittel beschichtet worden sind, eingespritzt. Die Formstandzeit betrug 30 sec. Die Teile wurden 45 min bei 120°C getempert. Nach 14-tägiger Lagerung bei 20°C wurden die Eigenschaften der Formkörper bestimmt (Tabelle).

Herstellung der Fließpreß-Teile (1-II)

Die getemperten Formteile (1-I) wurden in einer handelsüblichen Schneidmessermühle zu einem Granulat mit Teilchen eines maximalen Teilchendurchmessers von 4 mm zerkleinert. Dieses Granulat wurde 15 min in einem Trockenschrank mit Luft von 180°C erwärmt und dann in eine auf 185°C vorgewärmte Stahl-Tauchkantenform, die in einer hydraulischen Presse (Hersteller: Fa. Schwabenthan, D-1000 Berlin, Modell 300 S) montiert war, eingebracht.
Nach dem Einfüllen wurde die Tauchkantenform geschlossen und bei einer fortwährenden Formtemperatur von 185°C mit einem Preßdruck (spez. Forminnendruck) von ca. 300 bar belastet. Nach einer Preßzeit von 3 min wird die Form aufgefahren, das Preßteil heiß entformt und außerhalb der Presse abgekühlt. Nach Abkühlen auf 20°C wurden die mechanischen Eigenschaften bestimmt (Tabelle).

EP 0 554 750 A2

Beispiel 2

Herstellung eines Polyurethanharnstoff-Teils (erfindungsgemäß)

A: Polyolkomponente

70,12 Tle eines Polyetherpolyols der OH-Zahl 44, hergestellt durch Propoxylierung von Trimethylolpropan und anschließende Ethoxylierung des Propoxylierungsproduktes (PO:EO-Gewichtsverhältnis 86,5:13,5),
23,7 Tle eines Gemisches aus 65 % 2,4- und 35 Gew.-% 2,6-Diamino-3,5-diethylbenzol,
2 Tle eines Estergruppen aufweisenden Umsetzungsproduktes der OH-Zahl 35 aus Ricinolsäure und 1,6-Hexandiol,
1 Tl Triethylendiamin,
0,18 Tle Dimethylzinndilaurat
0,2 Tle Dibutylzinndilaurat
0,9 Tle N,N-(Bis-3-dimethylamino-propyl)-amin,
1,8 Tle Zinkstearat.

B: Isocyanat-Komponente (Kennzahl 110)

63,6 Tle eines Semiprepolymeren mit einem NCO-Gehalt von 24,5 % und einer Viskosität von 500±100 mPa.s (23°C), welches durch Umsetzung eines Gemischs aus 90 % 4,4'-und 10 % 2,4'-Diisocyanatodiphenylmethan mit Polypropylenglykol der OH-Zahl 515 erhalten wurde,

Herstellung der RIM-Teile (2-I)

Die oben aufgeführte Polyolkomponente wurde auf 45°C, die oben aufgeführte Isocyanatkomponente auf 40°C erwärmt und nach dem Reaktionsspritzgußprinzip (RIM-Verfahren) auf einem 12 l Rimdomat der Fa. Hennecke, Birlinghoven, in ein auf 65°C temperiertes Werkzeug (Plattenform der Abmessung 380 x 200 x 3 mm), dessen Innenwände mit einem äußeren Trennmittel beschichtet worden sind, eingespritzt. Die Formstandzeit betrug 30 sec. Die Teile wurden 45 min bei 120°C getempert. Nach 14-tägiger Lagerung bei 20°C wurden die Eigenschaften der Formkörper bestimmt (Tabelle).

Herstellung der Fließureß-Teile (2-II)

Die getemperten Formteile (2-I) wurden in einer handelsüblichen Schneidmessermühle zu einem Granulat mit Teilchen eines maximalen Teilchendurchmessers von 4 mm zerkleinert. Dieses Granulat wurde 15 min in einem Trockenschrank mit Luft von 180°C erwärmt und dann in eine auf 185°C vorgewärmte Stahl-Tauchkantenform, die in einer hydraulischen Presse (Hersteller: Fa. Schwabenthan, D-1000 Berlin, Modell 300 S) montiert war, eingebracht.
Nach dem Einfüllen wurde die Tauchkantenform geschlossen und bei einer fortwährenden Formtemperatur von 185°C mit einem Preßdruck <spez. Forminnendruck) von ca. 300 bar belastet, Nach einer Preßzeit von 3 min wird die Form aufgefahren, das Preßteil heiß entformt und außerhalb der Presse abgekühlt. Nach Abkühlen auf 20°C wurden die mechanischen Eigenschaften bestimmt (Tabelle).

Beispiel 3

Herstellung eines Polyurethanharnstoff-Teils (erfindungsgemäß)

Dieses Beispiel zeigt, daß überraschenderweise auch geringere Mengen an Katalysator verwendet werden können.

A: Polyolkomponente

69,9 Tle eines Polyetherpolyols der OH-Zahl 44, hergestellt durch Propoxylierung von Trimethylolpropan und anschließende Ethoxylierung des Propoxylierungsproduktes (PO:EO-Gewichtsverhältnis 86,5:13,5),
23,7 Tle eines Gemisches aus 65 % 2,4- und 35 Gew.-% 2,6-Diamino-3,5-diethylbenzol,
2 Tle eines Estergruppen aufweisenden Umsetzungsproduktes der OH-Zahl 35 aus Ricinolsäure und 1,6-Hexandiol,

5

0,7 Tle Triethylendiamin,
0,1 Tle Dimethylzinndilaurat
1,8 Tle N,N-(Bis-3-dimethylamino-propyl)-amin,
1,8 Tle Zinkstearat.

B: Isocyanat-Komponente (Kennzahl 110)

63,9 Tle eines Semiprepolymeren mit einem NCO-Gehalt von 24,5 % und einer Viskosität von 500±100 mPa`s (23 ° C), welches durch Umsetzung eines Gemischs aus 90 % 4,4'-und 10 % 2,4'-Diisocyanatodiphenylmethan mit Polypropylenglykol der OH-Zahl 515 erhalten wurde,

Herstellung der RIM-Teile (3-I)

Die oben aufgeführte Polyolkomponente wurde auf 45 ° C, die oben aufgeführte Isocyanatkomponente auf 40 ° C erwärmt und nach dem Reaktionsspritzgußprinzip (RIM-Verfahren) auf einem 12 l Rimdomat der Fa. Hennecke, Birlinghoven, in ein auf 65 ° C temperiertes Werkzeug (Plattenform der Abmessung 380 x 200 x 3 mm), dessen Innenwände mit einem äußeren Trennmittel beschichtet worden sind, eingespritzt. Die Formstandzeit betrug 30 sec. Die Teile wurden 45 min bei 120 ° C getempert. Nach 14-tägiger Lagerung bei 20 ° C wurden die Eigenschaften der Formkörper bestimmt (Tabelle).

Herstellung der Fließpreß-Teile (3-II)

Die getemperten Formteile (3-1) wurden in einer handelsüblichen Schneidmessermühle zu einem Granulat mit Teilchen eines maximalen Teilchendurchmessers von 4 mm zerkleinert. Dieses Granulat wurde 15 min in einem Trockenschrank mit Luft von 180 ° C erwärmt und dann in eine auf 185 ° C vorgewärmte Stahl-Tauchkantenform, die in einer hydraulischen Presse (Hersteller: Fa. Schwabenthan, D-1000 Berlin, Modell 300 S) montiert war, eingebracht.

Nach dem Einfüllen wurde die Tauchkantenform geschlossen und bei einer fortwährenden Formtemperatur von 185 ° C mit einem Preßdruck (spez. Forminnendruck) von ca. 300 bar belastet. Nach einer Preßzeit von 3 min wird die Form aufgefahren, das Preßteil heiß entformt und außerhalb der Presse abgekühlt. Nach Abkühlen auf 20 ° C wurden die mechanischen Eigenschaften bestimmt (Tabelle).

## Tabelle

Mechanische Eigenschaften der nach den Beispielen 1 bis 3 hergestellten RIM-Teile (1-I, 2-I, 3-I) und Fließpreßteile (1-II, 2-II, 3-II) im Vergleich

|  | Vergleich | | erfindg. | | erfindg. | |  |
|---|---|---|---|---|---|---|---|
|  | 1-I | 1-II | 2-I | 2-II | 3-I | 3-II |  |
| Rohdichte | 1200 | 1220 | 1200 | 1230 | 1220 | 1230 | $kg/m^3$ |
| Shore-D-Härte | 62 | 62 | 61 | 62 | 62 | 62 |  |
| Zugfestigkeit | 25 | 18 | 25 | 26 | 27 | 25 | MPa |
| Bruchdehnung | 200 | 35 | 160 | 150 | 170 | 165 | % |
| Biege-E-Modul | 870 | 840 | 810 | 780 | 790 | 800 | MPa |

Alle Bestimmungen erfolgten bei 20° C unter jeweils gleichen Testbedingungen.

Diese Tabelle zeigt, daß, obwohl sowohl die RIM-Teile als auch die Fließpreßteile unter jeweils identischen Verarbeitungsbedingungen hergestellt worden sind, die Werterhaltung nach Granulation und Fließpreßverarbeitung bei den RIM-Materialien nach Beispielen 2 und 3 wesentlich höher als bei einem Polyurethanharnstoffmaterial nach dem Stand der Technik (Beispiel 1) ist.

7

**Patentansprüche**

1. Verfahren zur Herstellung von Formkörpern der Dichte 0,8 bis 1,4 g/cm$^3$ aus Harnstoffgruppen aufweisenden Polyurethanen durch ein- oder zweistufige Umsetzung

   a) einer Polyisocyanatkomponente, bestehend aus einem Polyisocyanat oder Polyisocyanatgemisch der Diphenylmethanreihe, mit

   b) einer Polyolkomponente, bestehend aus mindestens einem Polyetherpolyol,

   c) einer Diaminkomponente, bestehend aus 1-Methyl-3,5-diethyl-2,4-diaminobenzol oder dessen technischen Gemischen mit 1-Methyl-3,5-diethyl-2,6-diaminobenzol in einer Menge von 5 bis 100 Gew.-%, bezogen auf das Gewicht der Komponente b),

   d) Katalysatoren für die NCO/OH-Additionsreaktion,

   e) weiteren Hilfs- und Zusatzmitteln

   unter Einhaltung einer NCO-Kennzahl von 70 bis 140 nach dem Prinzip der Reaktionsspritzgußtechnik in geschlossenen Formen, dadurch gekennzeichnet, daß man

   als Komponente a) eine solche einer (mittleren) NCO-Funktionalität von 2,0 bis 2,2 und einem NCO-Gehalt von 8 bis 32 Gew.-%,

   als Komponente b) eine solche einer (mittleren) Hydroxylfunktionalität von 2,5 bis 3,5, einer (mittleren) Hydroxylzahl von 35 bis 50 mg KOH/g, bestehend aus solchen Polyetherpolyolen, die endständig 5 bis 19 Gew.-%, bezogen auf das Gewicht der Polyetherpolyole, an aufgepropften Ethylenoxid-Blöcken aufweisen, und

   als Komponente e) aliphatische Polyetheramine des Molekulargewichtsbereichs 200 bis 800 und/oder Ethylendiamin-Propoxylierungsprodukte des Hydroxylzahlbereichs 200 bis 1200 mg KOH/g und/oder Veresterungsprodukte von 1,6-Hexandiol mit Rizinolsäure in einer Gesamtmenge dieser Zusatzmittel von 0,1 bis 10 Gew.-%, bezogen auf das Gewicht der Komponente b), gegebenenfalls mit weiteren Hilfs- und Zusatzmitteln verwendet.

2. Verfahren gemäß Anspruch 1, dadurch gekennzeichnet, daß man als weitere Hilfs- und Zusatzmittel e) gemahlene Kurzglasfasern oder Glasflakes in einer Menge von bis zu 30 %, bezogen auf das Gesamtgewicht aller Komponenten a) bis e), verwendet.